# EUROPEAN PATENT APPLICATION

(11) **EP 3 502 984 A1**
(43) Date of publication of application: **26.06.2019**
(21) Application number: 18213362.9
(22) Date of filing: 18.12.2018
(51) Int. Cl.: G06Q 10/06, G06Q 50/12

(54) **MANAGEMENT OF BUILDING ROOM OCCUPANCY AND AVAILABILITY INFORMATION**

(30) Priority: 23.12.2017 IN 201711046509
(71) Applicant: Carrier Corporation, Jupiter, FL 33478 (US)
(72) Inventor: Kuenzi, Adam, Salem, OR Oregon 97302-1142 (US); Lingala, Ramesh, 500081 Telangana (IN); Santhosh, Amuduri, 500081 Telangana (IN); Dumbala, Mohan Reddy, 500081 Telangana (IN)
(74) Representative: Schmitt-Nilson Schraud Waibel Wohlfrom Patentanwälte Partnerschaft mbB

(57) **Abstract**

A system is provided for deployment in a building with multiple rooms. The system includes a network and a monitoring element disposed in signal communication with the network. The monitoring element is configured to monitor an occupancy status of one of the multiple rooms and to report the occupancy status to the network. The network is configured to provide a notification reflective of the occupancy status.

## Description

### BACKGROUND

The following description relates to building management and, more specifically, to a system of room occupancy management in a building or hotel whereby individuals are informed about availability.

Buildings, such as hotels, apartment buildings, condominiums and office buildings, often provide equipment and services in convenient spaces where people can go to exercise, eat or work for a time period. In busy hotels with a lot of guests who want to use exercise equipment in the hotel gym, for example, some of those guests are sometimes disappointed to find all of the exercise equipment that they wanted to use to already be in use by another guest when they arrive in the hotel gym.

In certain cases, building management provides additional services to individuals in order to avoid such disappointments. For hotels, these additional services can allow hotel guests wishing to use certain exercise equipment at certain times to reserve the exercise equipment during time slots. These types of additional services can be cumbersome, however, since they still result in hotel guests waiting for their time slot.

### BRIEF DESCRIPTION

According to an aspect of the disclosure, a system is provided for deployment in a building with multiple rooms. The system includes a network and a monitoring element disposed in signal communication with the network. The monitoring element is configured to monitor an occupancy status of one of the multiple rooms and to report the occupancy status to the network. The network is configured to provide a notification reflective of the occupancy status.

In accordance with additional or alternative embodiments, the network includes a wireless network.

In accordance with additional or alternative embodiments, the network includes a Bluetooth ™ Low Energy (BTLE) network.

In accordance with additional or alternative embodiments, the monitoring element includes a door access system configured to count a number of individuals entering and leaving the one of the multiple rooms.

In accordance with additional or alternative embodiments, the occupancy status includes a usage status of an asset in the one of the multiple rooms and the monitoring element includes a usage sensor operably disposed within the asset.

In accordance with additional or alternative embodiments, the one of the multiple rooms is a fitness center in a hotel and the asset includes exercise equipment.

In accordance with additional or alternative embodiments, the monitoring element includes an application installed on a mobile computing device.

In accordance with additional or alternative embodiments, the network is configured to provide the notification automatically or upon request.

In accordance with additional or alternative embodiments, the notification includes a passive or active notification and is displayable on multiple types of devices.

According to another aspect of the disclosure, a system is provided for deployment in a building with multiple rooms. The system includes a network and a monitoring element disposed in signal communication with the network. The system is configured to monitor respective usage statuses of assets in one or more of the multiple rooms and to report the respective usage statuses to the network. The network is configured to provide a notification reflective of the respective usage statuses to an individual interested in using at least one of the assets in the one or more of the multiple rooms.

In accordance with additional or alternative embodiments, the network includes a wireless network.

In accordance with additional or alternative embodiments, the network includes a Bluetooth ™ Low Energy (BTLE) network.

In accordance with additional or alternative embodiments, the monitoring element includes a door access system configured to count a number of individuals entering and leaving each of the one or more of the multiple rooms.

In accordance with additional or alternative embodiments, the monitoring element includes a usage sensor operably disposed within each of the assets in the one or more of the multiple rooms.

In accordance with additional or alternative embodiments, one of the multiple rooms is a fitness center in a hotel and the assets include pieces of exercise equipment.

In accordance with additional or alternative embodiments, the monitoring element includes an application installed on a mobile computing device.

In accordance with additional or alternative embodiments, the network is configured to provide the notification automatically or upon request.

In accordance with additional or alternative embodiments, the notification includes a passive or active notification and is displayable on multiple types of devices.

In accordance with additional or alternative embodiments, historical data is used to verify the respective usage statuses.

According to another aspect of the disclosure, a method of monitoring asset usage and informing individuals about asset usage information is provided. The method includes disposing a monitoring element in signal communication with a network, configuring the monitoring element to monitor respective usage statuses of assets in one or more of multiple rooms of a building and to report the respective usage statuses to the network and configuring the network to provide a notification reflective of the respective usage statuses to an individual interested in using at least one of the assets in the one or more of the multiple rooms.

In accordance with additional or alternative embodiments, one of the multiple rooms is a fitness center in a hotel and the assets include pieces of exercise equipment.

These and other advantages and features will become more apparent from the following description taken in conjunction with the drawings.

### BRIEF DESCRIPTION OF THE DRAWINGS

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1 is a schematic illustration of a building in which a system for management of building room occupancy and available information is deployable in accordance with embodiments;
FIG. 2 is a plan view of a guest room of the building of FIG. 1 in accordance with embodiments;
FIG. 3 is a plan view of an additional public space, such as a fitness center, of the building of FIG. 1 in accordance with embodiments;
FIG. 4 is a plan view of an additional public space, such as a restaurant, of the building of FIG. 1 in accordance with embodiments
FIG. 5 is a schematic illustration of a server of the building of FIG. 1 in accordance with embodiments;
FIG. 6 is a flow diagram illustrating a method of monitoring and confirming/verifying asset usage in accordance with embodiments;
FIG. 7 is a graphical illustration of the system of FIG. 1 in accordance with embodiments; and
FIG. 8 is a flow diagram illustrating a method of monitoring asset usage and informing individuals about asset usage information in accordance with embodiments.

These and other advantages and features will become more apparent from the following description taken in conjunction with the drawings.

### DETAILED DESCRIPTION

As will be described below, a system is provided for managing and monitoring occupancy of a room in a building, for determining an availability of the room or an asset within the room from results of the managing and monitoring and for informing an individual about the availability of the room as a whole or the asset. In an exemplary case, the system may be provided for use in a building such as a hotel. Here, the system manages and monitors occupancy of the fitness center in the hotel, determines an availability of the fitness center or one or more pieces of exercise equipment in the fitness center from results of the managing and monitoring and for informing a guest of the hotel about the availability of the fitness center as a whole or the one or more pieces of exercise equipment. The system may be enabled by a door access system counting people as they enter the fitness center and then sending a notification to a mobile computing device of the guest by way of wireless communication networks or through local Bluetooth ™ Low Energy (BTLE) beacons if the door lock of the fitness center is offline. The system could also be enabled by the pieces of equipment transmitting (e.g., through BTLE) occupancy statuses through the door access system for availability of equipment, seating, etc., and by a processing element that tracks equipment usages and current statuses. Alternatively, the system could be enabled by guests' phone applications detecting guest locations and reporting the same to the door access system.

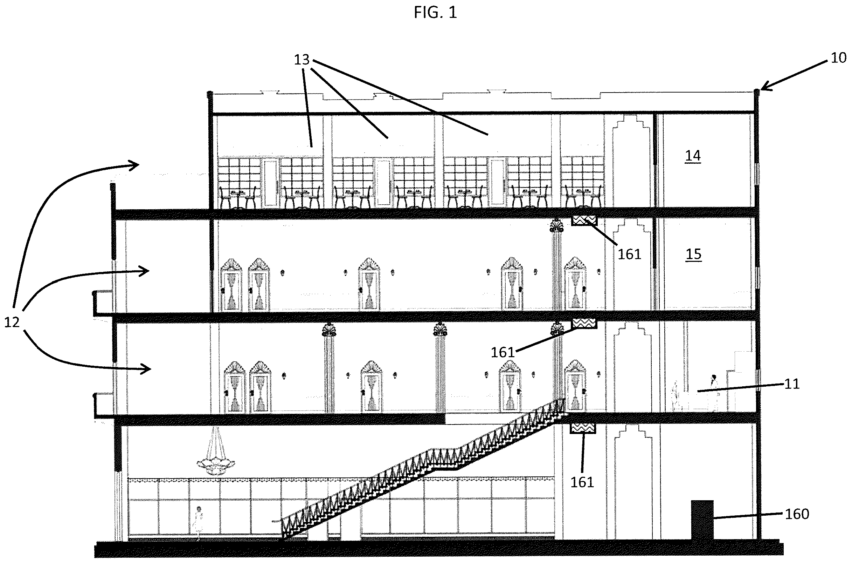

With reference to FIG. 1, a building 10 is provided. While the building 10 may be configured as a hotel, an office building, an apartment building, etc., the following description will relate to the building 10 being configured as a hotel for purposes of clarity and brevity. The building 10 includes a front desk 11, multiple floors 12 and multiple guest rooms 13 on each of the multiple floors 12. The building 10 also includes additional public and private spaces including, for example, a fitness center 14 and a restaurant 15. Regardless of their public or private condition, the multiple guest rooms 13, the fitness center 14 and the restaurant 15 are all respective examples of multiple rooms of the building 10.

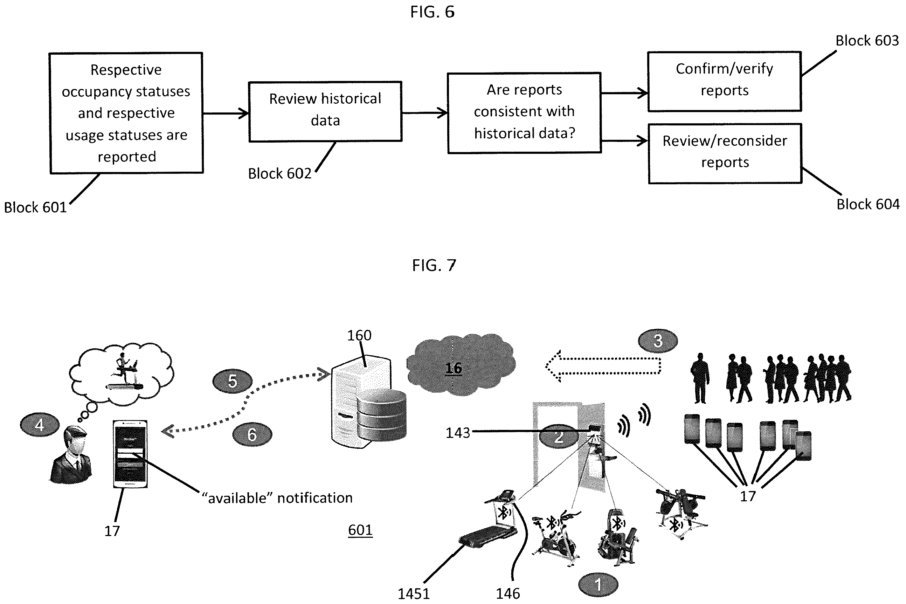

The building 10 may also include various assets of various types, which will be described in detail below, and a network 16 (see FIG. 6). In accordance with embodiments, the network 16 may be provided as a wired or wireless network and may be enabled and hosted by a server 160 and one or more communications devices 161 distributed throughout the building 10. The one or more communications devices 161 may include routers, signal repeaters, etc. In some cases, the one or more communications devices 161 may include Bluetooth ™ Low Energy (BTLE) devices as well as devices that are communicative via Wi-Fi networks, Zigbee networks and other well-known communication networks (LTE, LoRa, etc.).

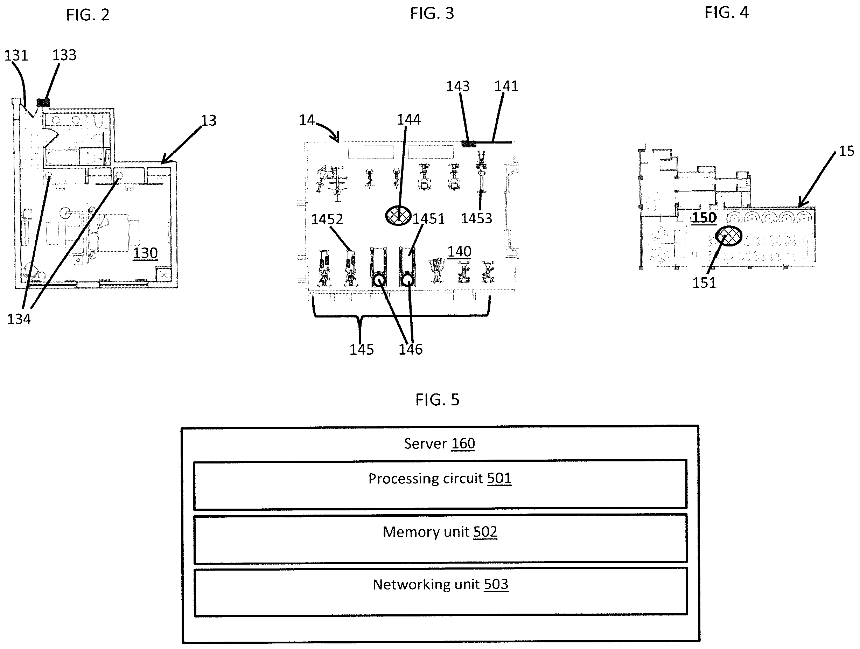

With reference to FIG. 2, each one of the multiple guest rooms 13 includes one or more interior spaces 130 that is accessible via a front door 131. The front door 131 is equipped with a door lock which may be coupled to an online or offline door access controller 133 (in an event the door access controller 133 is offline, the count maintained can be relayed to the server 160 by a mobile device). A guest staying at the hotel initially checks in at the front desk 11 and is given access rights to his guest room 13 which he then presents to the door access controller 133 prior to engaging the door lock. The door access controller 133 then controls the door lock to either grant the guest access to the guest room 13 or prohibit such access based on whether or not the access rights are verified. The access rights may be presented as a code, a key card or in an application which is installed on a mobile device 17 (see FIG. 6) held by the guest and communicative with the network 16 directly or via additional communication networks, such as cellular networks. The access rights may be usable by the guest to access his guest room as well as certain additional public spaces in the building 10, such as the fitness center 14 and the restaurant 15.

In accordance with embodiments, the door access controller 133 may count a number of people entering or exiting the guest room 13 by counting a number of times the front door 131 is opened and closed. Since more than one person can enter and exit the guest room 13 during each opening and closing of the front door 131, the count may be otherwise enabled, facilitated or confirmed by an in-room sensor 134 that monitors one or more environmental conditions within the guest room 13 and/or by the application installed on the mobile device 17 (here, the application monitors the location and movement of the mobile device within the building 10 and thus the guest room 13).

In accordance with embodiments, the door lock may have a sensor for detecting whether the door is opened or closed. Further, the door lock may have a sensor that detects the passage of people through the front door 131. These sensors may include, for example, a light or reflective beam signal that indicates when the door is open or when someone passes through the front door 13. In addition, the application and/or the mobile device 17 can recognize that the mobile device 17 is near or in the guest room by well-known features. These include, for example, utilization of a Bluetooth ™ beacon from the door lock or by triangulation of Wi-Fi signals. Also, it is to be understood that, if the mobile device 17 is in the guest room 13, the guest must be in the room as most people don't leave their mobile device 17 unaccompanied.

Whether the count of the number of people entering and exiting the guest room 13 is generated by the door access controller 133, the in-room sensor 134 and/or the application installed on the mobile device 17, the count may be communicated to and received by the network 16 or, more particularly, the server 160. The network 16 recognizes the information provided by the count as an indication of an occupancy status of the guest room 13.

With reference to FIG. 3, the fitness center 14 may be located on any of the multiple floors 12 and includes one or more interior spaces 140 that are accessible via a front door 141. As above, the front door 141 is equipped with a door lock which may be coupled to an online or offline door access controller 143 (again, in an event the door access controller 133 is offline, the count maintained can be relayed to the server 160 by a mobile device). Once a guest staying at the hotel checks into the front desk 11 and is given access rights to his guest room 13 that also work with the fitness center 14, the guest can present the access rights to the door access controller 143. The door access controller 143 then controls the door lock to either grant the guest access to the fitness center 14 or prohibit such access based on whether or not the access rights are verified.

In accordance with embodiments, the door access controller 143 may count a number of people entering or exiting the fitness center 14 by counting a number of times the front door 141 is opened and closed. Since more than one person can enter and exit the fitness center 14 during each opening and closing of the front door 141, the count may be otherwise enabled, facilitated or confirmed by an in-room sensor 144 that monitors one or more environmental conditions within the fitness center 14 and/or by the application installed on the mobile device 17 (here, the application monitors the location and movement of the mobile device within the building 10 and thus the fitness center 14 similarly as described above).

In the fitness center 14, the assets of the building 10 may be provided as pieces of exercise equipment 145. The pieces of exercise equipment 145 may include, for example, treadmills 1451, elliptical machines 1452, rowing machines 1453, etc. Each piece of exercise equipment 145 may include a usage sensor 146 that senses whether the piece of exercise equipment 145 is currently in use or not. Readings of the usage sensors 146 can also be used to enable, facilitate or confirm the count of the number of people in the fitness center 14.

As used herein, the in-room sensor 144 may be a camera that has built-in video processing analytics that determine from the video feed how many people are in the fitness center 14. This may be done by comparing a baseline picture with no people in the room with a current video image and the number of 'blobs' that are different can determine how many people are in the room. Additionally or alternatively, the in-room sensor 144 may be a thermal imager that senses heat/cold and based on the number of 'hot spots' in the field of view where each person is a hot-spot this could lead to a rough count of occupancy, a motion sensor that compares subsequent frames to detect movement of distinct objects or a radar or passive infrared sensor that has multiple zones of detection with enough granularity to indicate which parts of the room are occupied and from that to determine a count of occupancy or a % of occupancy.

As used herein, the usage sensor 146 may include a sensor that detects if a machine is running, switch on or moving and reports the status of the detecting as a usage status back to the network 16 or, more particularly, the server 160. In some cases, the usage sensor 146 may be configured to sense vibration and infer from those vibrations that the machine is in use. Alternatively, the usage sensor 146 may be configured to be integrated into the machine and directly recognize if the machine is powered or switch on then the sensor knows it is in use, etc.

Whether the count of the number of people entering and exiting the fitness center 14 is generated by the door access controller 143, the in-room sensor 144, the application installed on the mobile device 17 and/or the usage sensors 146, the count may be communicated to and received by the network 16 or, more particularly, the server 160. The network 16 recognizes the information provided by the count as an indication of an occupancy status of the fitness center 14 and as an indication of the usage status of the pieces of exercise equipment 145

It is to be understood that a 'count' can be indicative of 'usage' and vice-versa. A 'count' could be expressed as an actual number (e.g., a room has 10 of a maximum 15 occupancy), as a percentage occupancy, as a bar-graph, a simple occupied/not occupied indicator, etc.

With reference to FIG. 4, the restaurant 15 may be located on any of the multiple floors 12 and includes one or more interior spaces 150 that are often accessible without requiring passage through a door. Thus, a count of the number of people entering and exiting the restaurant 15 may only be provided by in-restaurant sensors 151 and/or by the application installed on the mobile device 17 (here, the application monitors the location and movement of the mobile device within the building 10 and thus the restaurant 15 similarly as described above). The restaurant management system may indicate which tables are full and this could also be used to indicate a rough occupancy status of the restaurant 15 (e.g., X% of the tables are full). The restaurant management system could also send a message to the server 160 on the network 16 to indicate occupancy status.

Whether the count of the number of people entering and exiting the restaurant 15 is generated by the in-restaurant sensors 151 and/or the application installed on the mobile device 17, the count may be communicated to and received by the network 16. The network 16 recognizes the information provided by the count as an indication of an occupancy status of the restaurant 15.

With reference to FIG. 5, at least the server 160 includes a processing circuit 501, a memory unit 502 and a networking unit 503 (it is to be understood that all computing devices mentioned herein may include these or similar fetaures). The processing circuit 501 may be provided as a central or distributed computing device. The networking unit 503 is configured such that the processing circuit 501 is communicative with the network 16, the one or more communications devices 161, the door access controllers 133, the in-room sensors 134, the door access controller 143, the in-room sensor 144, the usage sensors 146, the in-restaurant sensors 151 and the application installed on the mobile device 17. The memory unit 502 includes executable instructions stored thereon which are executable by the processing circuit 501. When executed by the processing circuit 501, the executable instructions cause the processing circuit 501 to operate as disclosed herein.

With reference to FIG. 6, a system 601 is provided for deployment in the building 10. The system 601 includes the network 16 with the server 160 and the one or more communications devices 161, as described above, and a monitoring element disposed in signal communication with the network 16. The monitoring element may be provided as one or more of the server 160, the door access controllers 133, the in-room sensors 134, the door access controller 143, the in-room sensor 144, the usage sensors 146, the in-restaurant sensors 151 and the application installed on the mobile device 17. As such, the monitoring element is configured to monitor occupancy statuses of the multiple guest rooms 13, the fitness center 14 and the restaurant 15, to additionally monitor respective usage statuses of assets in one or more of the multiple guest rooms 13, the fitness center 14 and the restaurant 15 and to report the respective occupancy statuses and the respective usage statuses to the network 16. The network 16 and, more particularly, the processing circuit 501 of the server 160 may be configured to provide a notification reflective of the respective occupancy statuses and the respective usage statuses to an individual who may be interested in entering a given guest room 13 or who may be interested in using at least one of the assets in the fitness center 14 or the restaurant 15.

In accordance with embodiments, the monitoring element or the server 160 may also be configured to detect and/or calculate a decay factor in the occupancy statuses. That is, if a door lock indicates that twenty people enter a room and if we know what the average time that people spend in the particular room, then over time the server 160 can indicate a confidence level or a decay factor of the count based on average occupancy times. This way the server 160 could indicate that the occupancy is 10 people after a given period of time without further input or it could indicate that the occupancy is 5-10 people in a range (because of the uncertainty due to elapsed time or to uncertainty of the count).

In accordance with embodiments, the notification may be provided automatically or upon request and may be provided as a passive notification (e.g., a red light associated with a treadmill 1451 in the fitness center 14) or an active notification (e.g., a text message alerting the individual to which the mobile device 17 is associated to the fact that the treadmill 1451 in the fitness center 14 is in use and has been for 15 minutes). In accordance with embodiments, the notification may be displayed on a mobile device 17, on a computer, on a screen in the guest room 13, on a screen in a lobby of the hotel, on a website, etc. This status could be continuous and updatable and available for viewing continuously or it could be provided on request/demand as indicated herein. In the red light example given above, the red light may be provided as a physical red light, a red light on a map displayed on the mobile device 17 or other computer that shows the current status of the treadmill or it may be a general occupancy indication of the fitness center 14 as in "50% full), etc.

In accordance with further embodiments, the monitoring element may be configured to perform analytics. In such cases, the memory unit 502 may include recording capacity such that occupancy data and usage data aggregated over time or over certain times is recorded as historical data which is usable by the monitoring element to determine how occupancy data and usage data change over time. In this way, certain trends can be identified such as, for example, a trend suggesting that the fitness center 14 is busiest during a certain time of the day. This type of trend could then be used as additional information for gauging the occupancy status of a certain region at a certain time of day, for gauging the usage status of a certain machine in the fitness center 14 at a certain time of day or for determining building management strategies based on occupancy and usage (e.g., making certain machines in the fitness center 14 available at certain particularly busy times or increasing an amount of food laid out in the buffet of the restaurant 15 at certain particularly busy time for the restaurant 15).

The identified trends (or trend information) may be displayed alone or with current status information. That is, trend information may be included along with current occupancy status so that a guest can ascertain, based on historical information as to when a better time might be to visit a given location, use a given resource, etc.

Thus, with reference to FIG. 6, once the monitoring element generates an output including the respective occupancy statuses and the respective usage statuses and reports that output to the network 16 (block 601), at least one of the monitoring element, the network 16 and the processing circuit 501 may review the historical data stored in the memory unit 502 (block 602) to verify that one or more of the respective occupancy statuses and the respective usage statuses are consistent with the historical data (block 603) or to determine whether any one or more of the respective occupancy statuses and the respective usage statuses are inconsistent with the historical data and need to be reviewed, reconsidered, etc. (block 604). In the latter case, in particular, it may be prudent to consider not advising a user of a non-occupied or not-in-use status of a given location or a machine in the fitness center 14. For example, if a given machine in the fitness center 14 is defective it might never be in use but it would be inconvenient to suggest a user that he go to the fitness center 14 to use it. Here, historical data or trend information could indicate that the machine was at one time in use frequently but is no longer used and thus may need to be repaired or replaced.

As shown in FIG. 7, in an initial operation of the system 601, the usage sensors 146 of each of the pieces of equipment 145 in the fitness center 14 report that they are not currently in use to the server 160 of the network 16 via the door access controller 143 (points 1 and 2 with point 2 being optional) while the applications installed on the mobile devices 17 of multiple guests report the locations and movement of the multiple guests throughout the building 10 to the server 160 of the network 16 (point 3). At a certain time, a given guest decides he wants to use one of the treadmills 1451 and uses the application installed on his mobile device 17 to look up the usage statuses of the treadmills 1451 from the server 160 of the network 16 (points 4 and 5). The processing circuit 501 (see FIG. 5) responds to the given guest's inquiry by reviewing a most recent usage report of each of the usage sensors 146, determining that all of the treadmills 1451 are available for use and notifying the given guest of this availability by, for example, issuing an "available" text message or by displaying a green light over each of the treadmill icons in the application (point 6).

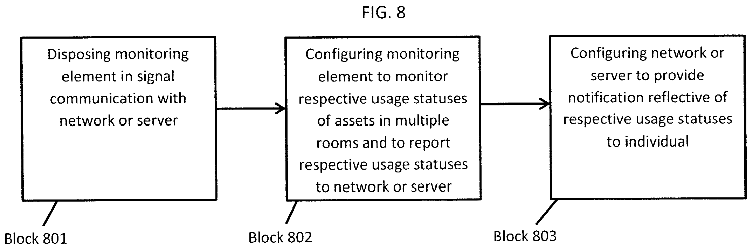

With reference to FIG. 8, a method of monitoring asset usage and informing individuals about asset usage information is provided. As shown in FIG. 8, the method includes disposing a monitoring element in signal communication with a network or a server (block 801), configuring the monitoring element to monitor respective usage statuses of assets in one or more of multiple rooms of a building and to report the respective usage statuses to the network or the server (block 802) and configuring the network or the server to provide a notification reflective of the respective usage statuses to an individual interested in using at least one of the assets in the one or more of the multiple rooms (block 803).

The systems and methods described herein saves customer time and can be applied to commercial domains (i.e., where hotel guests can be tracked for occupancy in particular rooms or where the vacancy level of a parking lot is reported to a potential customer) or educational institutions (i.e., where students will get the occupancy status in the library, indoor sports room, etc.).

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the spirit and scope of the disclosure. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. A system for deployment in a building with multiple rooms, comprising:
a network; and
a monitoring element disposed in signal communication with the network and configured to monitor an occupancy status of one of the multiple rooms and to report the occupancy status to the network,
the network being configured to provide a notification reflective of the occupancy status.

2. The system according to claim 1, wherein the network comprises a wireless network, or a Bluetooth ™ Low Energy (BTLE) network.

3. The system according to claim 1 or 2, wherein the monitoring element comprises a door access system configured to count a number of individuals entering and leaving the one of the multiple rooms.

4. The system according to any of the preceding claims,
wherein the occupancy status comprises a usage status of an asset in the one of the multiple rooms and the monitoring element comprises a usage sensor operably disposed within the asset; and/or
wherein the one of the multiple rooms is a fitness center in a hotel and the asset comprises exercise equipment.

5. The system according to any of the preceding claims, wherein the monitoring element comprises an application installed on a mobile computing device.

6. The system according to any of the preceding claims, wherein the network is configured to provide the notification automatically or upon request.

7. The system according to any of the preceding claims, wherein the notification comprises a passive or active notification and is displayable on multiple types of devices.

8. A system for deployment in a building with multiple rooms, comprising:
a network; and
a monitoring element disposed in signal communication with the network and configured to monitor respective usage statuses of assets in one or more of the multiple rooms and to report the respective usage statuses to the network,
the network being configured to provide a notification reflective of the respective usage statuses to an individual interested in using at least one of the assets in the one or more of the multiple rooms.

9. The system according to claim 8, wherein the network comprises a wireless network, or a Bluetooth ™ Low Energy (BTLE) network.

10. The system according to claim 8 or 9, wherein the monitoring element comprises a door access system configured to count a number of individuals entering and leaving each of the one or more of the multiple rooms.

11. The system according to any of claims 8 to 10,
wherein the monitoring element comprises a usage sensor operably disposed within each of the assets in the one or more of the multiple rooms; and/or
wherein one of the multiple rooms is a fitness center in a hotel and the assets comprise pieces of exercise equipment.

12. The system according to any of claims 8 to 11, wherein the monitoring element comprises an application installed on a mobile computing device.

13. The system according to any of claims 8 to 12, wherein the network is configured to provide the notification automatically or upon request.

14. The system according to any of claims 8 to 13,
wherein the notification comprises a passive or active notification and is displayable on multiple types of devices; and/or
wherein historical data is used to verify the respective usage statuses.

15. A method of monitoring asset usage and informing individuals about asset usage information, the method comprising:
disposing a monitoring element in signal communication with a network;
configuring the monitoring element to monitor respective usage statuses of assets in one or more of multiple rooms of a building and to report the respective usage statuses to the network; and
configuring the network to provide a notification reflective of the respective usage statuses to an individual interested in using at least one of the assets in the one or more of the multiple rooms.
